# EUROPEAN PATENT APPLICATION

(11) **EP 4 064 142 A1**
(43) Date of publication of application: **28.09.2022**
(21) Application number: 20889701.7
(22) Date of filing: 15.10.2020
(51) Int. Cl.: G06Q 10/00, G05B 19/418

(54) **MAINTENANCE PLAN ASSISTANCE METHOD AND MAINTENANCE PLAN ASSISTANCE DEVICE**

(30) Priority: 21.11.2019 JP 2019210365
(71) Applicant: Hitachi, Ltd., Tokyo 100-8280 (JP)
(72) Inventor: SHINGE, Takahide, Tokyo 100-8280 (JP); AMIMOTO, Kaoru, Tokyo 100-8280 (JP); NISHIKAWA, Genta, Tokyo 100-8280 (JP); NUMATA, Ippei, Tokyo 100-8280 (JP); UEKI, Yosuke, Tokyo 100-8280 (JP)
(74) Representative: MERH-IP Matias Erny Reichl Hoffmann Patentanwälte PartG mbB
(86) International application number: PCT/JP2020/038904
(87) International publication number: WO 2021/100371

(57) **Abstract**

A maintenance plan assistance system 100 configured to include: holding, in a storage device 101, remaining life information relating to devices covered by a maintenance plan, and a list of maintenance menus; and a computation device 104 identifying a maintenance effect when each maintenance menu is applied to each of the devices based on the maintenance menus and temporal changes in failure probabilities of each of the devices indicated by the remaining life information, identifying a variable range of a condition-based maintenance implementation timing, the variable range being dependent on the maintenance effect, and determining a maintenance menu including the variable range for a predetermined maintenance timing, and outputting, to a predetermined device, information including the maintenance menu identified by the determination and the condition-based maintenance implementation timing changed to the predetermined maintenance timing.

## Description

### [Technical Field]

The present invention relates to a maintenance plan assistance method and a maintenance plan assistance device, and more specifically relates to technologies that make it possible to set a financially optimal maintenance timing and to reduce maintenance costs based on the remaining life of a maintenance target.

### [Background Art]

In Japan, various plants and infrastructures are aging in various places, and there is a growing concern about unexpected problems. In order to avoid such a situation in advance or deal with it afterwards, individual maintenance measures are more likely to be required in each place according to the progression of aging. This can lead to maintenance costs remaining high.

As conventional technologies related to the maintenance of such facilities, there have been proposed, for example, an asset operation management assistance system (see PTL 1) and the like, including a database system and a computer for maintaining and updating a plurality of structures such as bridges. The asset operation management assistance system includes: maintenance renewal life cycle cost calculation means for calculating maintenance renewal life cycle costs for individual structures; medium- to long-term budget plan creation means for creating a medium- to long-term budget plan that satisfies a budget constraint by calculating a total maintenance renewal life cycle cost for all the structures based on the data on the maintenance renewal life cycle costs for the individual structures calculated by the maintenance renewal life cycle cost calculation means; and medium-term business plan creation means for determining the contents of repair/renovation business and renewal business to be implemented in each fiscal year based on the medium- to long-term budget plan created by the medium- to long-term budget plan creation means.

### [Citation List]

### [Patent Literature]

[PTL 1] Japanese Patent Application Publication No. 2006-323741

### [Summary of Invention]

### [Technical Problem]

When time-based maintenance (TBM) is adopted as the basic concept of maintenance operation as before, it is difficult to take agile and accurate measures against situations such as frequent occurrence of unexpected maintenance opportunities as described above.

On the other hand, aging of maintenance staff also leads to increasing risks of losing know-how due to their retirement. It can be said that such a situation is where the continuation of precise and best-timing maintenance measures is in jeopardy, and where there is concern about the frequent occurrence of malfunctions and associated outages in the facilities subject to maintenance.

Therefore, it is an object of the present invention to provide technologies that make it possible to set a financially optimal maintenance timing and to reduce maintenance costs based on the remaining life of a maintenance target.

### [Solution to Problem]

A maintenance plan assistance method of the present invention to solve the above problem executed by an information processing device, comprising: holding, in a storage device, remaining life information relating to devices covered by a maintenance plan, and a list of maintenance menus; and executing processing of identifying a maintenance effect when each maintenance menu is applied to each of the devices based on the maintenance menus and temporal changes in failure probabilities of each of the devices indicated by the remaining life information, identifying a variable range of a condition-based maintenance implementation timing, the variable range being dependent on the maintenance effect, and determining a maintenance menu including the variable range for a predetermined maintenance timing, and outputting, to a predetermined device, information including the maintenance menu identified by the determination and the condition-based maintenance implementation timing changed to the predetermined maintenance timing.

A maintenance plan assistance device of this invention comprising: a storage device that holds remaining life information relating to devices covered by a maintenance plan, and a list of maintenance menus; and a computation device that executes processing of identifying a maintenance effect when each maintenance menu is applied to each of the devices based on the maintenance menus and temporal changes in failure probabilities of each of the devices indicated by the remaining life information, identifying a variable range of a condition-based maintenance implementation timing, the variable range being dependent on the maintenance effect, and determining a maintenance menu including the variable range for a predetermined maintenance timing, and outputting, to a predetermined device, information including the maintenance menu identified by the determination and the condition-based maintenance implementation timing changed to the predetermined maintenance timing.

### [Advantageous Effects of Invention]

According to the present invention, it is possible to set a financially optimal maintenance timing and reduce maintenance costs based on the remaining life of a maintenance target.

### [Brief Description of Drawings]

[Fig. 1] Fig. 1 is a network configuration diagram including a maintenance plan assistance device according to the present embodiment.
[Fig. 2] Fig. 2 is a diagram showing a hardware configuration example of the maintenance plan assistance device according to the embodiment.
[Fig. 3] Fig. 3 is a diagram showing a hardware configuration example of a user terminal according to the embodiment.
[Fig. 4] Fig. 4 is a diagram showing a hardware configuration example of an analysis system according to the embodiment.
[Fig. 5] FIG. 5 is a diagram showing a data configuration example of a maintenance master DB according to the embodiment.
[Fig. 6] Fig. 6 is a diagram showing a data configuration example of a maintenance plan DB according to the embodiment.
[Fig. 7] Fig. 7 is a diagram showing a data configuration example of a production plan DB according to the embodiment.
[Fig. 8] Fig. 8 is a diagram showing a data configuration example of a remaining life information DB according to the embodiment.
[Fig. 9] Fig. 9 is a diagram showing a data configuration example of an operation history used by the analysis system according to the embodiment.
[Fig. 10] Fig. 10 is a diagram showing a data configuration example of a failure event history used by the analysis system according to the embodiment.
[Fig. 11] Fig. 11 is a diagram showing a data configuration example of a maintenance event history used by the analysis system according to the embodiment.
[Fig. 12] Fig. 12 is a diagram showing a flow example 1 of a maintenance plan assistance method according to the embodiment.
[Fig. 13] Fig. 13 is a diagram showing a flow example 2 of the maintenance plan assistance method according to the embodiment.
[Fig. 14] Fig. 14 is a diagram showing a screen example 1 according to the embodiment.
[Fig. 15] Fig. 15 is a diagram showing a conceptual example of clearing residual damage according to the embodiment.
[Fig. 16] Fig. 16 is a diagram showing a conceptual example of damage suppression according to the embodiment.
[Fig. 17] Fig. 17 is a diagram showing a conceptual example of maintenance implementation according to the embodiment.
[Fig. 18] Fig. 18 is a diagram showing a conceptual example of maintenance implementation according to the embodiment.
[Fig. 19] Fig. 19 is a diagram showing a screen example 2 according to the embodiment.
[Fig. 20] Fig. 20 is a diagram showing a screen example 3 according to the embodiment.
[Fig. 21] Fig. 21 is a diagram showing an example of application to development and operation of insurance products according to the embodiment.
[Fig. 22] Fig. 22 is a diagram showing an example of application to development and operation of insurance products according to the embodiment.
[Fig. 23] Fig. 23 is a diagram showing an example of application to development and operation of insurance products according to the embodiment.
[Fig. 24] Fig. 24 is a diagram showing an example of application to development and operation of insurance products according to the embodiment.

### [Description of Embodiments]

### <Network Configuration>

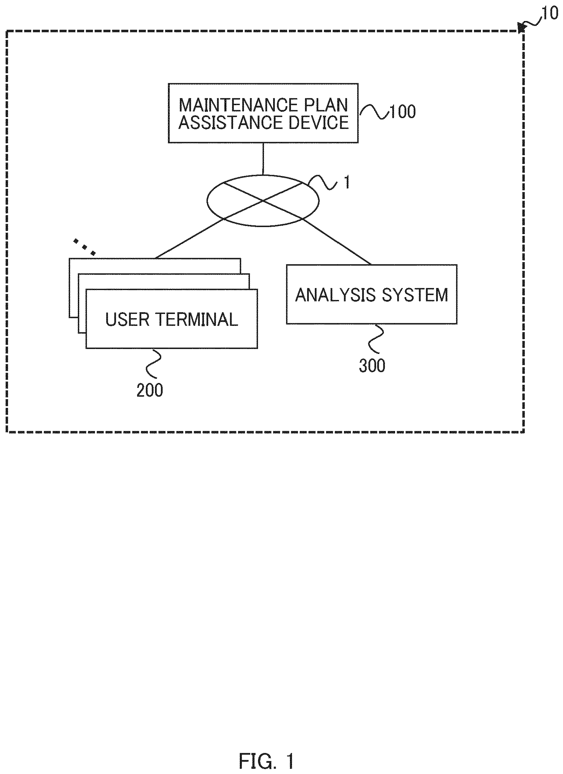

Hereinafter, an embodiment of the present invention will be described in detail with reference to the drawings. Fig. 1 is a network configuration diagram including a maintenance plan assistance system 100 according to this embodiment. The maintenance plan assistance system 100 shown in Fig. 1 is a computer device that makes it possible to set a financially optimal maintenance timing and to reduce maintenance costs based on the remaining life of a maintenance target.

The maintenance plan assistance device 100, a user terminal 200, and an analysis system 300 are communicably coupled to a network 1 shown in Fig. 1. A communication line such as the Internet or a local area network (LAN) is conceivable as the network 1, but the network 1 is not limited thereto.

As described above, the maintenance plan assistance device 100 is a computer device that makes it possible to set a financially optimal maintenance timing and to reduce maintenance costs based on the remaining life of a maintenance target. To be more specific, a server device is conceivable, which uses the user terminal 200 as a client terminal.

The user terminal 200 is an information processing terminal operated by a person in charge of maintenance operation at various manufacturers or the like, or a person in charge of developing and operating insurance products for those manufacturers or the like in an insurance company.

The user terminal 200 distributes information such as a production plan at the manufacturer to the maintenance plan assistance device 100, and also acquires a maintenance plan suitable for the production plan or the like from the maintenance plan assistance device 100.

The analysis system 300 is a simulation system that generates information on temporal changes in failure probabilities of devices subject to the maintenance plan as remaining life information related to each of the devices and provides the generated information to the maintenance plan assistance device 100.

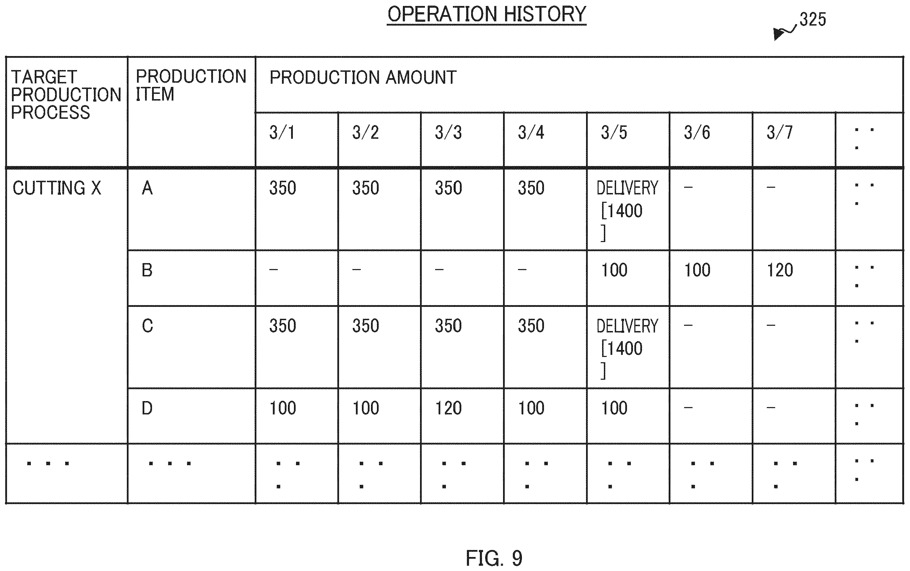

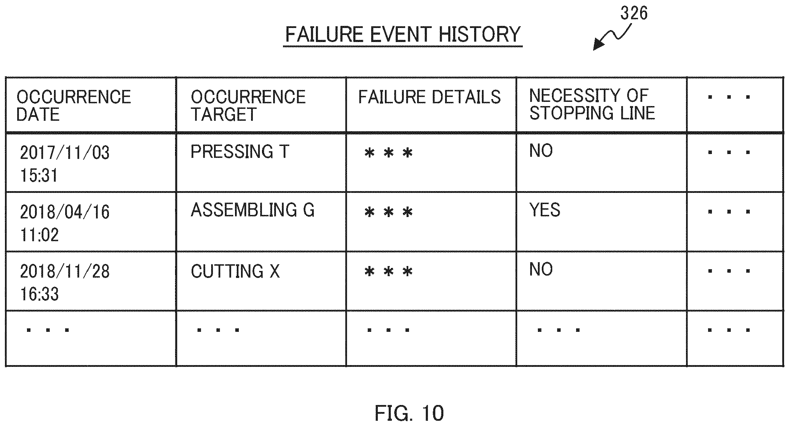

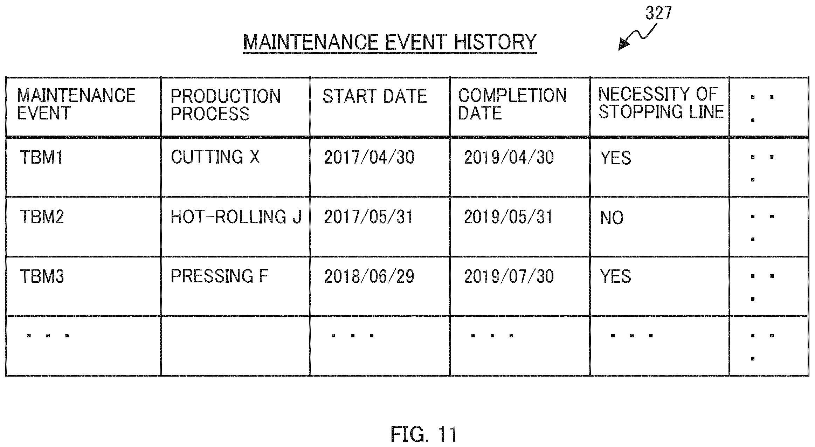

Although the configuration and functions of the analysis system 300 are not limited, a system is conceivable, for example, where information related to actual events such as an operation history (see Fig. 9), a history of failure events that have occurred (see Fig. 10), and a history of applied maintenance events (see Fig. 11) for each device subject to the maintenance plan is inputted to a machine learning engine to learn a correspondence between an operating period of the device, accumulation of damage to the device, resetting of the damage by the maintenance event, and the like, thereby generating a model for such damage, and an appropriate function (for example, Weibull function) is applied to this model to generate a model for failure probability to estimate a correspondence between operating time and failure probability distribution, and these models are implemented as an evaluation engine for cumulative damage and failure probability.

Therefore, in the analysis system 300, by inputting the past operation history and the information on the maintenance event implemented into the evaluation engine, the cumulative damage and the failure probability at a certain time point can be obtained. Thus, the analysis system 300 can identify temporal changes in cumulative damage and failure probabilities by obtaining the cumulative damage and the failure probabilities at each time point, and can provide the identified information to the maintenance plan assistance device 100.

As such an analysis method for the failure probability and the remaining life, the technology proposed by the applicant (for example, Japanese Patent Application Publication No. 2019-160128) may be appropriately adopted, and description of the technology is omitted as appropriate (the same applies hereinafter).

In this embodiment, the damage accumulated in each device will be explained mainly based on a situation corresponding to the operating time of the device, but such a situation is merely an example among the conceivable ones.

For example, a situation is also conceivable where, in addition to the operating time of the device, factors such as an environment in which the device is placed (for example, temperature, humidity, ventilation, acidity, alkalinity, and the like), physical phenomena that act or occur with the operation of the device (for example, vibration or hitting frequency, cycle, noise level, and the like) or parameters set for the device (for example, production quantity, the number of rotations, and the like) affect the accumulation of damage.

### <Hardware Configuration>

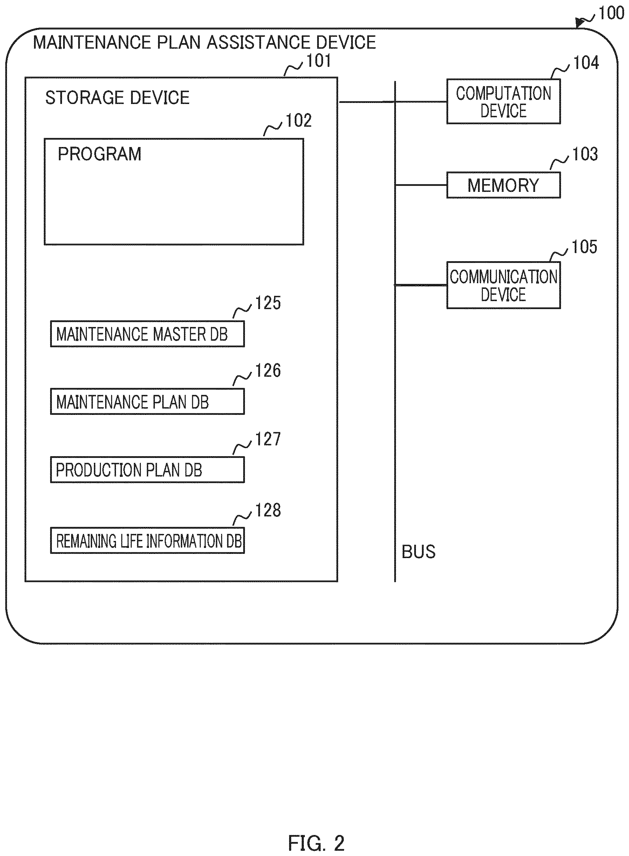

A hardware configuration of the maintenance plan assistance device 100 is as shown in Fig. 2. Specifically, the maintenance plan assistance device 100 includes a storage device 101, a memory 103, a computation device 104, an input device 105, an output device 106, and a communication device 107.

Among these devices, the storage device 101 includes an appropriate non-volatile storage element such as a solid state drive (SSD) or a hard disk drive.

The memory 103 includes a volatile storage element such as a RAM.

The computation device 104 is a CPU that executes a program 102 held in the storage device 101 by reading the program into the memory 103 or the like to performs integrated control of the device itself, and also performs various kinds of determination, computation, and control processing.

The communication device 105 is a network interface card coupled to the network 1 and configured to perform communication processing with other devices.

In addition to the program 102 for implementing the functions required for the maintenance plan assistance device 100 of this embodiment, a maintenance master DB 125, a maintenance plan DB 126, a production plan DB 127, and a remaining life information DB 128 are at least stored in the storage device 101. These databases will be described in detail later.

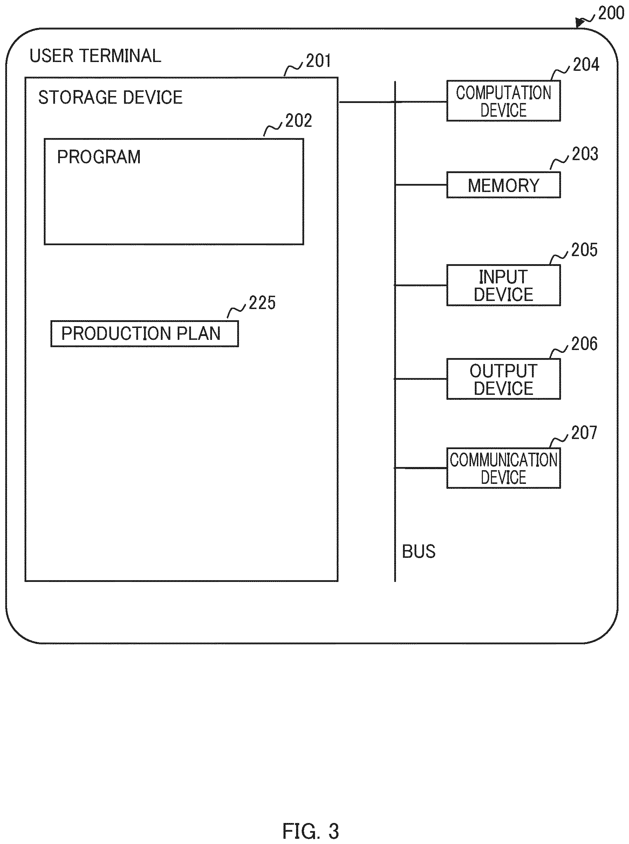

A hardware configuration of the user terminal 200 is as shown in Fig. 3. Specifically, the user terminal 200 includes a storage device 201, a memory 203, a computation device 204, an input device 205, an output device 206, and a communication device 207.

Among these devices, the storage device 201 includes an appropriate non-volatile storage element such as a solid state drive (SSD) or a hard disk drive.

The memory 203 includes a volatile storage element such as a RAM.

The computation device 204 is a CPU that executes a program 202 held in the storage device 201 by reading the program into the memory 203 or the like to performs integrated control of the device itself, and also performs various kinds of determination, computation, and control processing.

The input device 205 is an appropriate device such as a keyboard, a mouse, and a microphone that receives key input and voice input from a user.

The output device 206 is an appropriate device such as a display that displays processing data in the computation device 204, and a speaker.

The communication device 207 is a network interface card coupled to the network 1 and configured to perform communication processing with other devices.

In the storage device 201, at least a production plan 225 is stored in addition to a program 202 for implementing the functions required for the user terminal 200 of this embodiment. The production plan 225 is provided to the maintenance plan assistance device 100 and stored in the production plan DB 127. Therefore, the data configuration is the same as that of the production plan DB 127, and description thereof will be omitted.

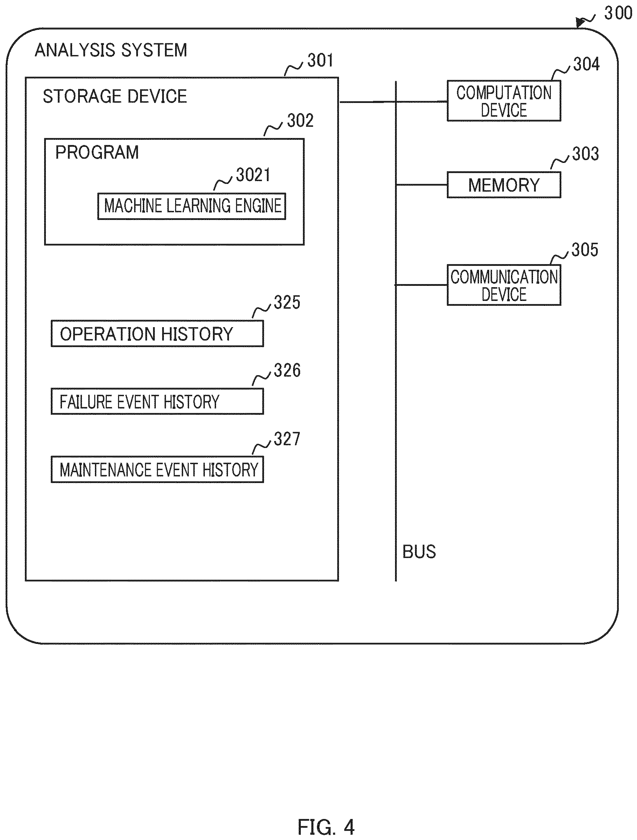

A hardware configuration of the analysis system 300 is as shown in Fig. 4. Specifically, the analysis system 300 includes a storage device 301, a memory 303, a computation device 304, and a communication device 307.

Among these devices, the storage device 301 includes an appropriate non-volatile storage element such as a solid state drive (SSD) or a hard disk drive.

The memory 303 includes a volatile storage element such as a RAM.

The computation device 304 is a CPU that executes a program 302 held in the storage device 301 by reading the program into the memory 303 or the like to performs integrated control of the device itself, and also performs various kinds of determination, computation, and control processing.

The communication device 305 is a network interface card coupled to the network 1 and configured to perform communication processing with other devices.

In addition to the program 302 for implementing the functions required for the analysis system 300 of this embodiment, an operation history 325, a failure event history 326, and a maintenance event history 327 are at least stored in the storage device 301. These histories will be described in detail later.

### <Data Structure Example>

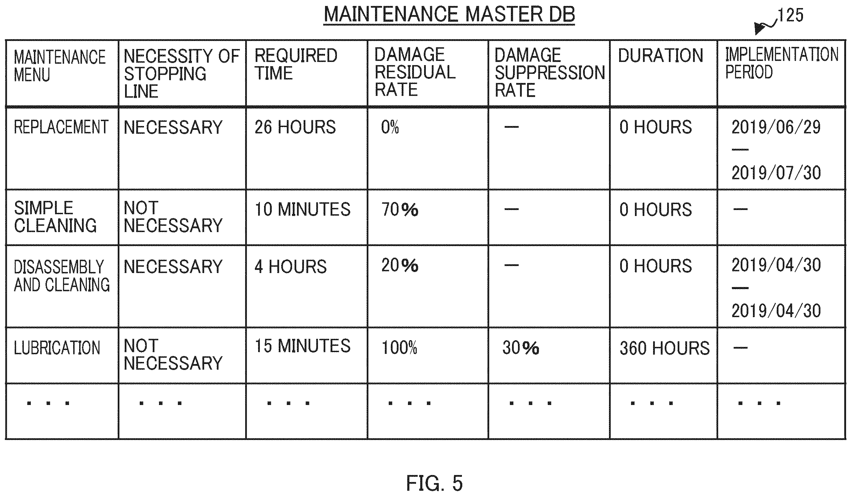

Next, the databases used by the maintenance plan assistance device 100 of this embodiment will be described. Fig. 5 shows an example of the maintenance master DB 125 in this embodiment.

The maintenance master DB 125 is a database that stores maintenance menus (hereinafter referred to as maintenance menus) managed in the maintenance plan assistance device 100. Such maintenance menus are applicable to both condition-based maintenance and regular maintenance.

The data structure is a set of records including data such as the necessity of stopping a production line due to the application of the maintenance menu, required time, damage residual rate, damage suppression rate, duration, and implementation period, with the name of the maintenance menu as a key.

Among such data, the damage residual rate is a value indicating how much damage is left over after the damage accumulated in the target device is removed by applying the maintenance menu. This value is predetermined for each maintenance menu based on past results and the like.

The damage suppression rate is a value indicating how much a damage cumulative rate, that is, increase rate over a certain period (that is, the duration) is suppressed (compared to a case where the maintenance menu is not applied) as a result of applying the maintenance menu to the target device. This value is predetermined for each maintenance menu based on past results and the like. The duration indicates the time during which the effect of the damage suppression rate described above continues.

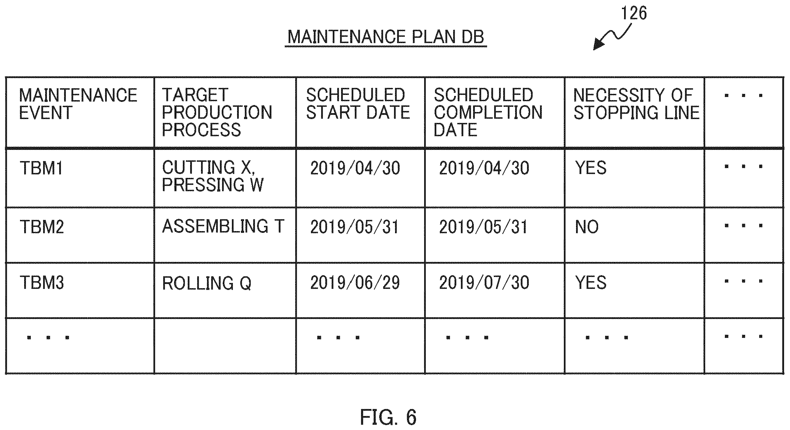

Fig. 6 shows an example of the maintenance plan DB 126 in this embodiment. The maintenance plan DB 126 of this embodiment is a database in which implementation plans for regular maintenance are accumulated.

The data structure is a set of records including data such as a production process subject to implementation of regular maintenance as a maintenance event, a scheduled start date and a scheduled completion date indicating the implementation period of the regular maintenance, and the necessity of stopping the line of the production process upon implementation of the regular maintenance, with identification information on the regular maintenance as a key. The information stored in the maintenance plan DB 126 is provided and acquired from the user terminal 200, for example.

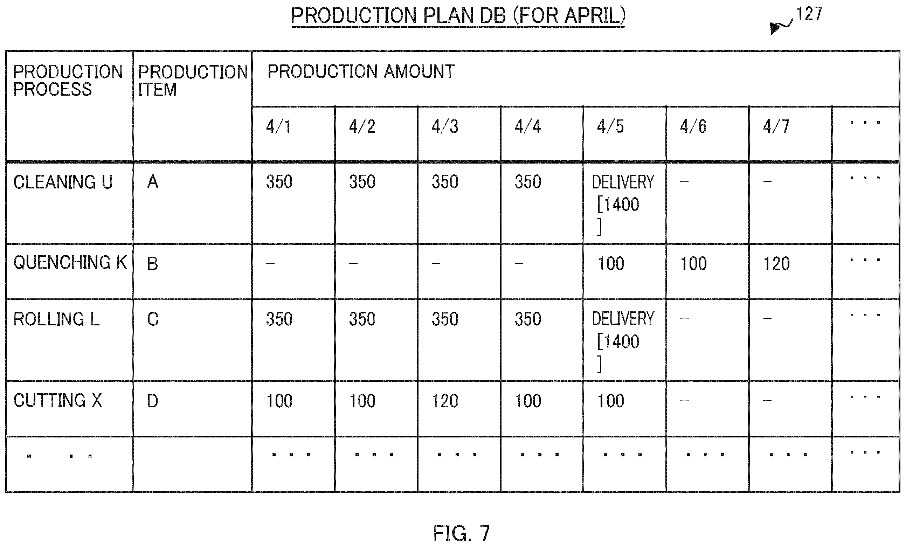

Fig. 7 shows an example of the production plan DB 127 in this embodiment. The production plan DB 127 of this embodiment is a database that stores information on production plans to be executed in the production process subject to the regular maintenance in the maintenance plan DB 126 described above.

The data structure is a set of records including data that defines a production amount (scheduled) of production items for each date in the target period, with the production process and the production items produced there as keys. The information on the production plans stored in the production plan DB 127 is provided and acquired from the user terminal 200, for example.

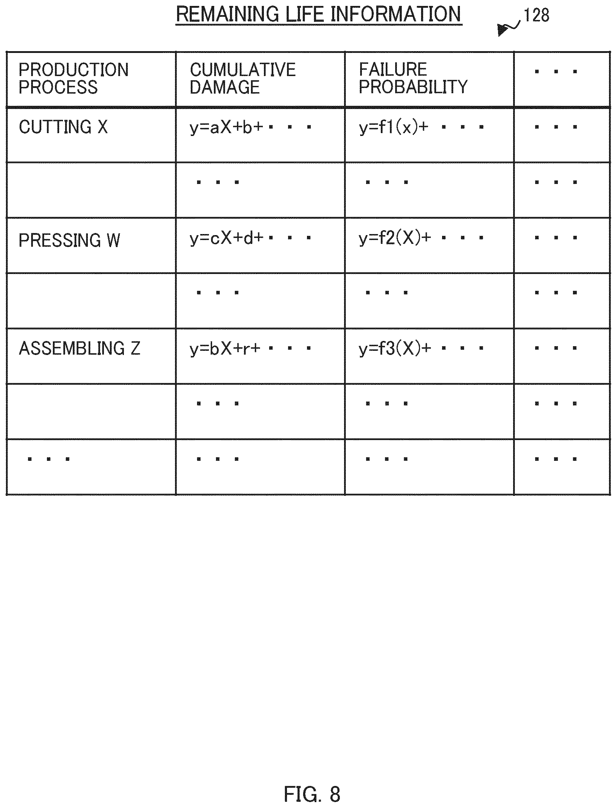

Fig. 8 shows an example of the remaining life information DB 128 in this embodiment. The remaining life information DB 128 of this embodiment is a database that stores information on changes in cumulative damage and failure probability generated by the analysis system 300 regarding the production process described above.

The data structure is a set of records including data such as cumulative damage and failure probability, with each target production process name as a key.

Among such data, the cumulative damage value is expressed by an expression (which is a linear expression with y representing the cumulative damage and x representing elapsed time in the example of Fig. 8, but is not limited thereto as a matter of course) that indicates damage accumulated over time in the device of the target production process.

As described above, a function that represents a model generated and held in the analysis system 300 (for example, a model obtained by learning the correspondence between the operating time of the device, the accumulation of damage to the device, and the resetting of the damage by the maintenance event) is conceivable as the cumulative damage described above.

The failure probability value is expressed by an equation representing a failure probability that gradually increases with the passage of time in the target production process (unless the maintenance menu is applied). As this failure probability equation, a function is conceivable that represents a model generated and held in the analysis system 300 (for example, a model related to the failure probability, which is obtained by applying an appropriate function to a damage-related model and estimates the correspondence between the operating time and failure probability distribution) as in the case of the function related to the cumulative damage described above.

Note that the information stored in the remaining life information DB 128 is provided and acquired from the analysis system 300, but the present invention is not limited thereto, and the maintenance plan assistance device 100 may generate such information itself by acquiring the same information and functions as those held in the analysis system 300 (the same applies hereinafter).

Next, the information used by the analysis system 300 of this embodiment will be described. Fig. 9 is a diagram showing a data configuration example of the operation history 325 used by the analysis system 300 in this embodiment.

The operation history 325 of this embodiment is a database that stores information on the operation status in the target production process described above, the information being distributed from the user terminal 200 to the analysis system 300, for example.

The data structure is a set of records including data such as production items in the target production process and production volume on each date, with identification information on the target production process as a key.

Fig. 10 is a diagram showing a data configuration example of the failure event history 326 used by the analysis system 300 in this embodiment. The failure event history 326 of this embodiment is a database that stores information on failures that have occurred in the target production process, the information being distributed from the user terminal 200 to the analysis system 300, for example.

The data structure is a set of records including data such as details of the failure and a line stop status, with identification information on the date and time of occurrence of the failure and the production process in which the failure has occurred as keys. The line stop status is a value indicating whether or not the target production process has been stopped due to the occurrence of the failure.

Fig. 11 is a diagram showing a data configuration example of the maintenance event history 327 used by the analysis system 300 in this embodiment. The maintenance event history 327 of this embodiment is a database that stores information on maintenance measures implemented for each of the target production processes, the information being distributed from the user terminal 200 to the analysis system 300, for example.

The data structure is a set of records including data such as the start date and completion date of the maintenance measure and the necessity of stopping the line, with a maintenance event that is the maintenance measure implemented and the production process as the implementation target as keys. The necessity of stopping the line is a value indicating whether or not the line needs to be stopped as a result of the maintenance measures implemented on the production process.

### <Preprocessing>

Hereinafter, the actual procedure of the maintenance plan assistance method in this embodiment will be described with reference to the drawings. Various operations corresponding to the maintenance plan assistance method described below are realized by a program executed by the maintenance plan assistance device 100 or the analysis system 300 after being read into its memory or the like. The program includes codes for performing the various operations described below.

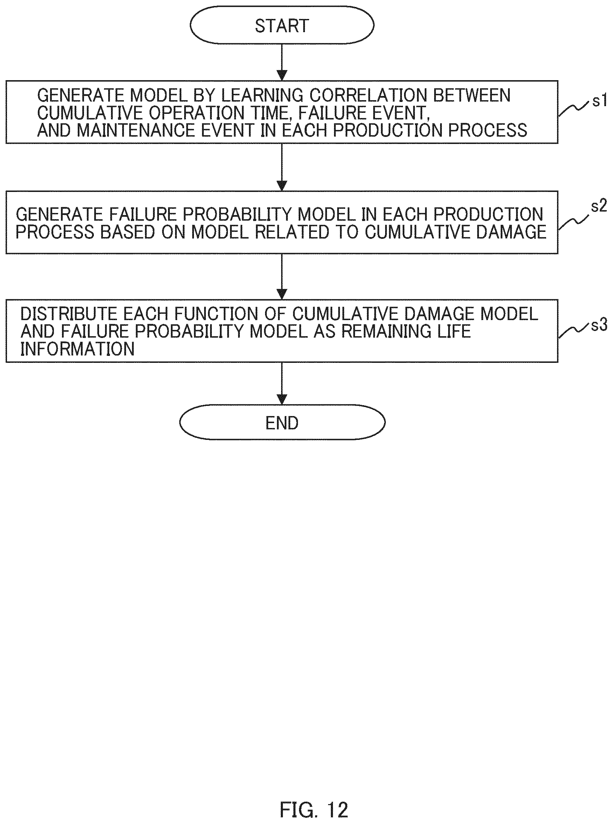

Fig. 12 is a diagram showing a flow example 1 of the maintenance plan' assistance method in this embodiment. Here, the procedure for the analysis system 300 to generate the remaining life information will be described first. Therefore, the subject that executes the processing here is the analysis system 300.

As described above, the analysis system 300 holds and can utilize the respective information including the operation history 325, the failure event history 326, and the maintenance event history 327 obtained from the user terminal 200.

Therefore, the analysis system 300 receives the respective information including the operation history 325, failure event history 326, and maintenance event history 327 described above and gives the information to a predetermined machine learning engine, for example, to learn the correspondence between the operating time of the device in each production process, the accumulation of damage to the device, resetting of the damage by the maintenance event, and the like (s1), for example.

This learning allows a model for estimating cumulative damage to be generated by inputting the value of the cumulative operating time and the value of the occurrence time of the maintenance event for the device of each production process. To be more specific, the analysis system 300 generates the model by learning about a phenomenon that the longer the cumulative operating time, the more the production devices among the devices in the production process deteriorate, that is, the cumulative damage is accumulated, while such a problem is suppressed or reset by implementing maintenance measures.

Next, the analysis system 300 generates a model for the failure probability in the device of each production process based on the model related to the cumulative damage obtained in the above s1 (s2). When generating such a failure probability model, an appropriate function (for example, Weibull function) is applied to the cumulative damage model to generate a failure probability model that estimates the correspondence between the operating time and the failure probability distribution.

The analysis system 300 distributes the function, that is, the remaining life information indicated by each model of the cumulative damage and the failure probability obtained in s1 and s2 to the maintenance plan assistance device 100 through the network 1 (s3) and then terminates the processing. Thus, the maintenance plan assistance device 100 acquires the remaining life information and stores the information in the remaining life information DB 128.

### <Main Flow>

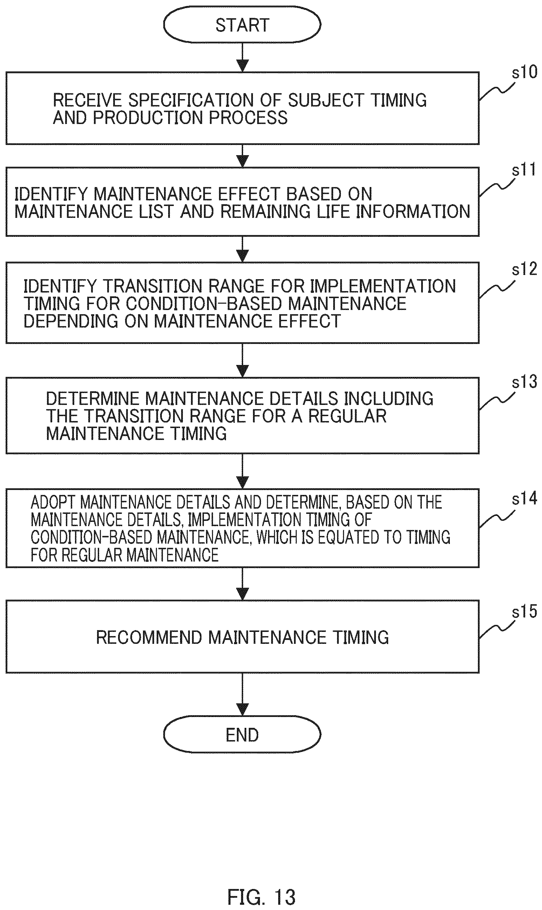

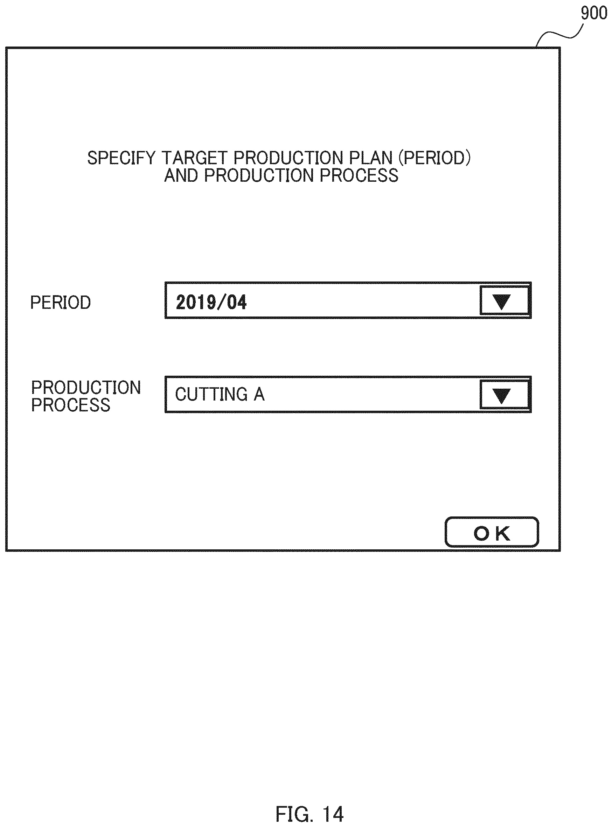

Next, the main processing executed by the maintenance plan assistance device 100 will be described. Fig. 13 is a diagram showing a flow example 2 of the maintenance plan assistance method in this embodiment. In this case, the maintenance plan assistance device 100 receives instruction of the timing and the target production process (for example, screen 900 in Fig. 14) from the user terminal 200 (s10).

In response to the instruction received in s10, the maintenance plan assistance device 100 identifies a maintenance effect when each maintenance menu is applied based on the maintenance master DB 125 and the cumulative damage in the target production process and the temporal changes in the failure probability indicated by the remaining life information DB 128 (s11) .

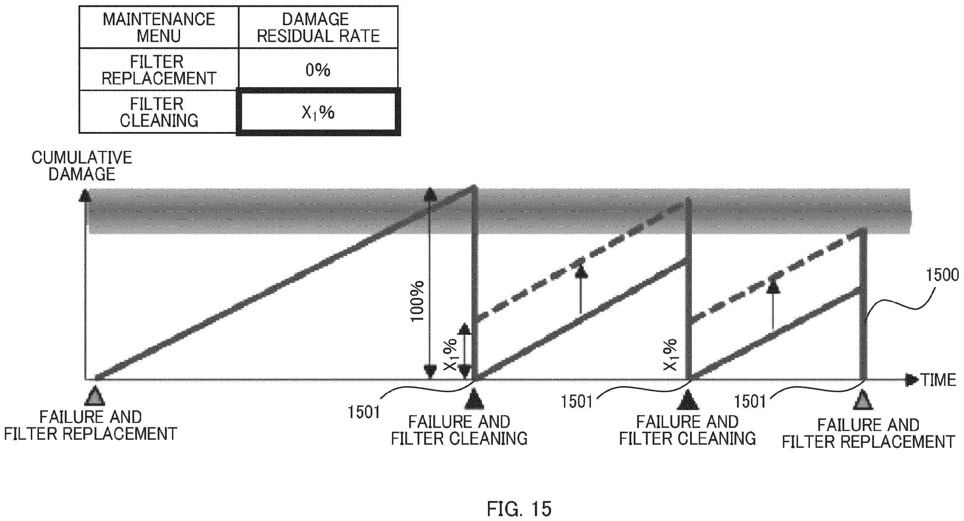

Upon such identification of the maintenance effect, a situation is estimated, for example, where a line segment 1500 (see Fig. 15) represented by the "cumulative damage" expression of the target production process in the remaining life information DB 128 shows that the cumulative damage (that is, a damage residual rate that increases according to the cumulative operating time) becomes zero or is reduced at a timing 1501 when the maintenance menu is applied and new damage starts to be accumulated at that timing.

Here, the maintenance plan assistance device 100 holds the values of the "damage residual rate" in the maintenance master DB 125 for each maintenance menu, and thus can perform such estimation.

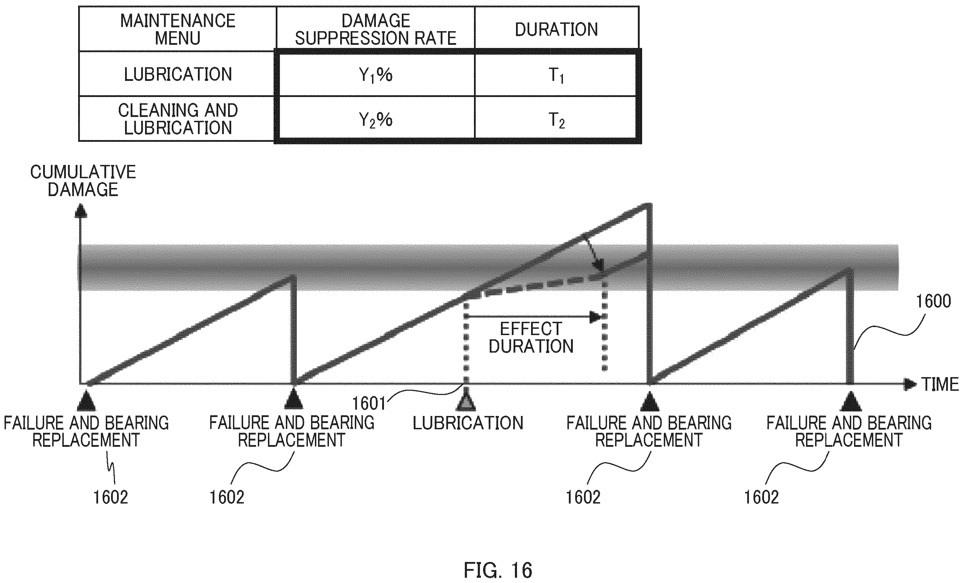

Alternatively, upon identification of the maintenance effect described above, a situation is estimated where a line segment 1600 (see Fig. 16) represented by the "cumulative damage" expression of the target production process in the remaining life information DB 128 shows that an increase in the cumulative damage (that is, a damage residual rate that increases according to the cumulative operating time) is suppressed for a certain period (duration) only at a timing 1601 when the maintenance menu is applied and new damage starts to be accumulated at that timing.

Here, the maintenance plan assistance device 100 holds the values of the "damage suppression rate" and its "duration" in the maintenance master DB 125 for each maintenance menu, and thus can perform such estimation. The example of Fig. 16 illustrates a situation of adopting the application timing 1602 for the maintenance menu that clears the damage residual rate to zero and the application timing 1601 for the maintenance menu that suppresses the damage suppression rate for a certain period only.

The maintenance plan assistance device 100 identifies the maintenance effects for each of the maintenance menus applied to the target production process in s11. This maintenance effect is the value of the damage residual rate or the damage suppression rate in the target period, which is reduced or suppressed when the maintenance menu is applied to the device of the target production process.

Then, the maintenance plan assistance device 100 identifies a variable range depending on the maintenance effect identified in s11 described above, for implementation timing for condition-based maintenance, instead of the regular maintenance (s12). This variable range represents the implementation timing of each maintenance menu in the maintenance master DB 125.

Here, the maintenance plan assistance device 100 calculates the implementation timing of each maintenance menu. It is assumed that J represents a maintenance menu implementation period (when a user-specified cumulative damage threshold is reached and maintenance menu implementation is required), J1 represents a maintenance menu implementation period start date, D0 represents a cumulative damage threshold (calculated by back calculation using the Weibull function from the user-specified failure probability threshold), Dj1 represents cumulative damage at J1, Z represents a maintenance menu implementation period, Z1 represents a fastest maintenance menu implementation period, H represents a scheduled date of regular maintenance implementation, Dz1 represents cumulative damage after maintenance at Z1, D(j1-z1) represents cumulative damage from Z1 to J1.

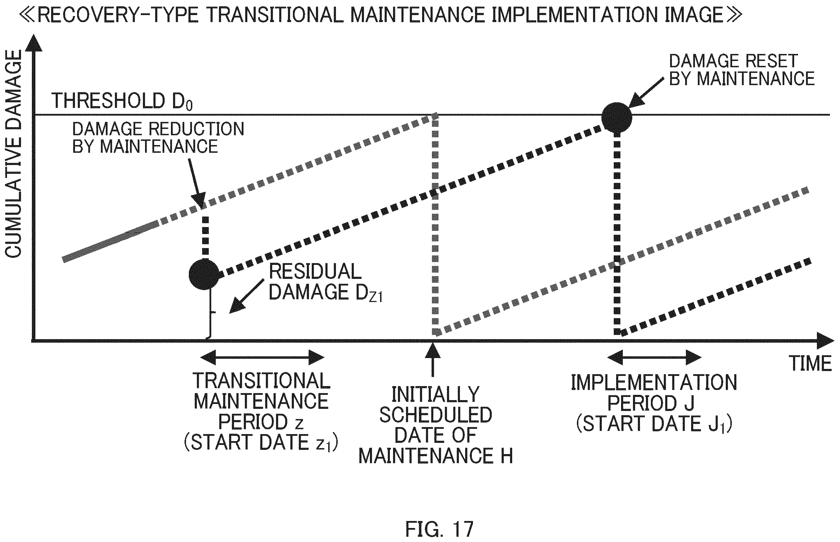

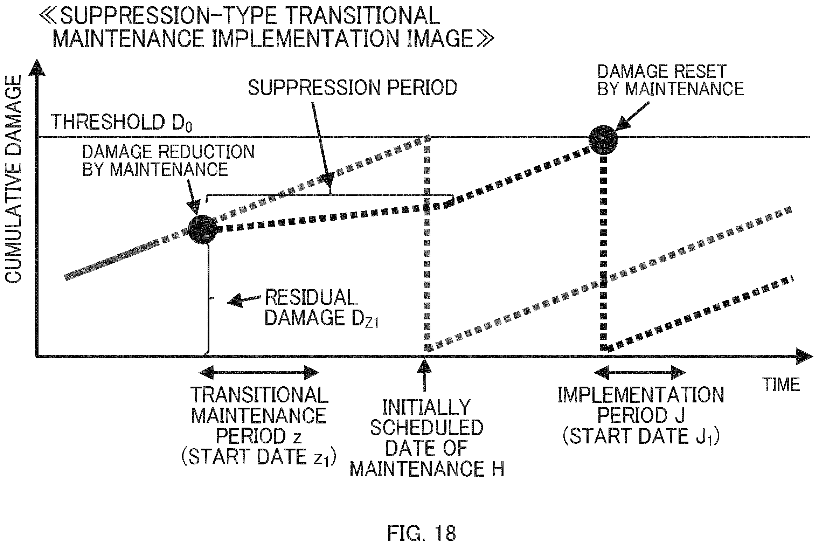

In that case, the premise is that after the maintenance menu is implemented, the timing when the cumulative damage becomes DO should be after J1. Therefore, the maintenance plan assistance device 100 obtains the minimum value Z1 of Z such that Dj1= Dz1+D(j1-z1)□D0. The implementation period Z of the maintenance menu is Z1≤Z≤H. Such concepts are illustrated in Figs. 17 and 18.

Here, the case where the implementation of the maintenance menu for reducing the cumulative damage is assumed (Fig. 17) and the case where the implementation of the maintenance menu for suppressing an increase in the cumulative damage is assumed (Fig. 18) are shown.

Subsequently, the maintenance plan assistance device 100 determines the maintenance menu including the variable range specified in s12 described above for the scheduled implementation timing for the regular maintenance indicated by the maintenance plan DB 126 (sl3). In other words, the maintenance plan assistance device 100 determines the maintenance menu that enables implementation of meaningful maintenance by aligning the implementation timing with the implementation period for the regular maintenance.

In this embodiment, the case where the condition-based maintenance implementation timing is aligned with the implementation period for the regular maintenance has been described. However, the present invention is not limited thereto, and the condition-based maintenance implementation timing may be aligned with an arbitrary period determined to be suitable by the user based on the production plan, or with a period during which the maintenance plan assistance device 100 determines that the production line stop is minimized and the operation accuracy and speed of the device are maximized, that is, the production efficiency is maximized throughout the period (by the implementation of maintenance).

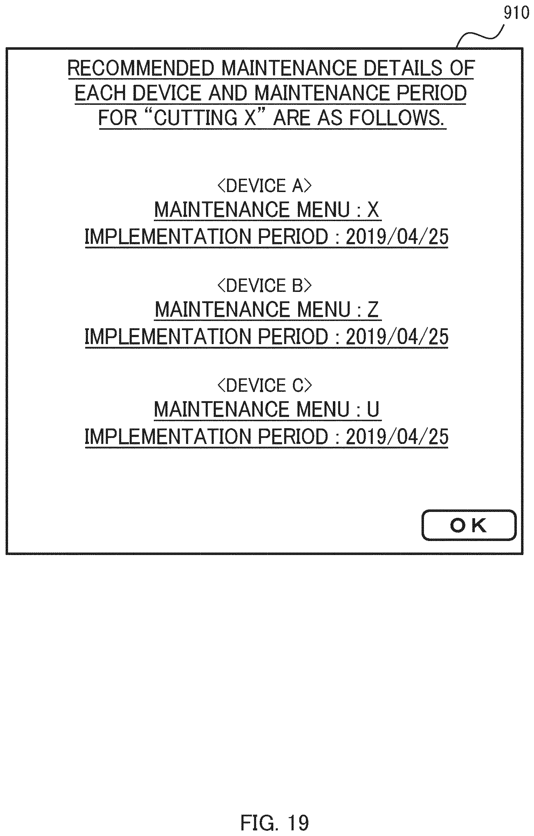

Next, the maintenance plan assistance device 100 generates the respective information on the maintenance menu determined in s13 and the condition-based maintenance implementation timing changed to the scheduled implementation timing for the regular maintenance as recommendation information (screen 910 in Fig. 19) (s14).

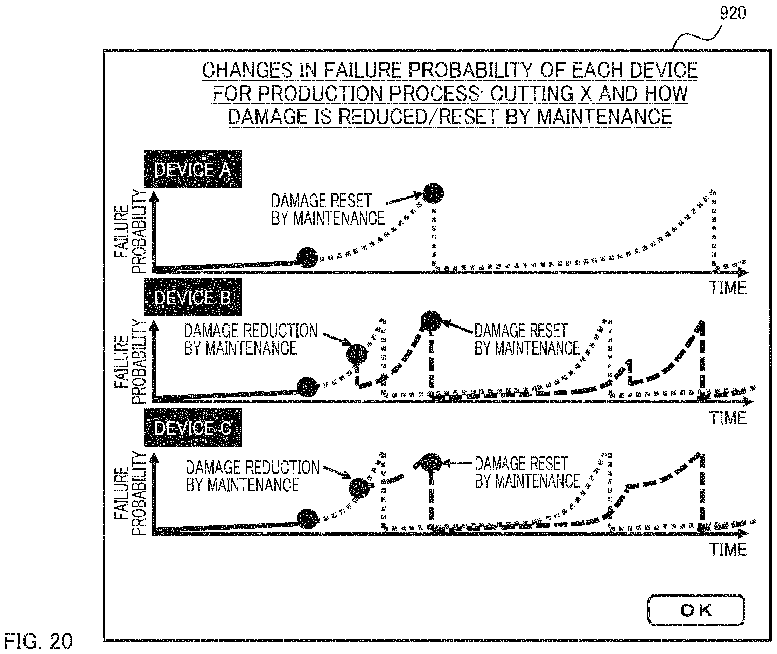

In this event, it is more preferable that the maintenance plan assistance device 100 includes how the cumulative damage is reduced or reset when the maintenance menu determined in s13 is applied to the target production process in the recommendation information as shown in a screen 920 in Fig. 20.

The maintenance plan assistance device 100 outputs the recommendation information obtained in s14 to the user terminal 200, for example (sl5), and then terminates the processing.

### <About Insurance Product>

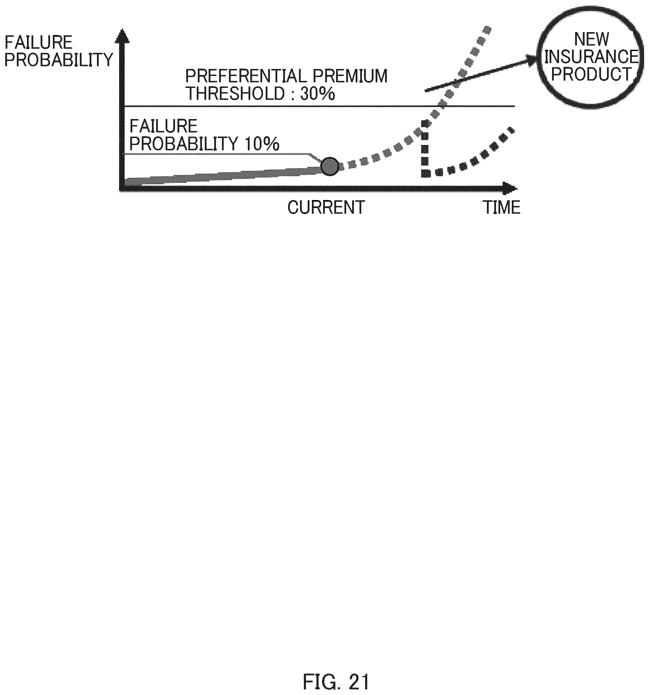

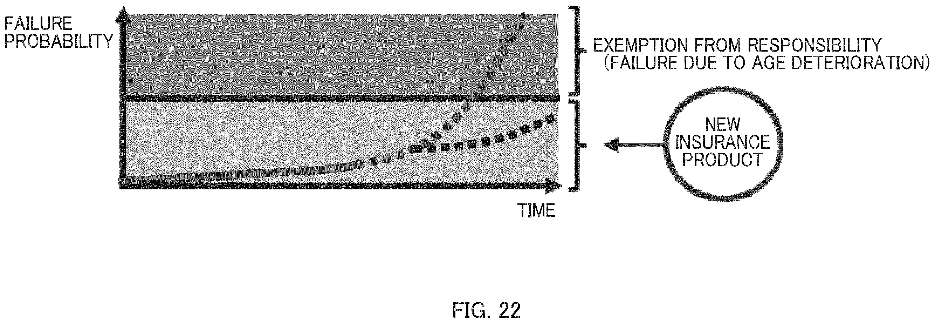

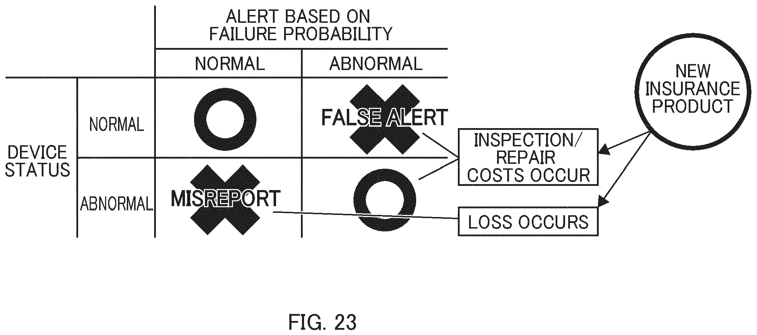

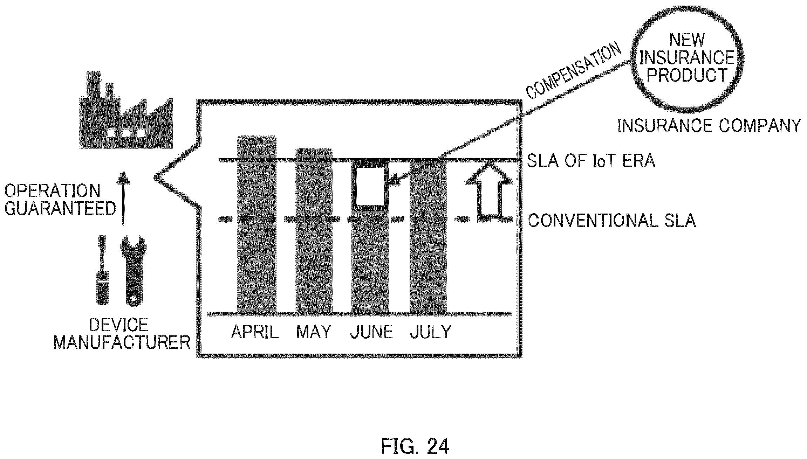

It is also possible to apply the failure probability information used in the maintenance plan assistance method of this embodiment to the development and operation of insurance products. For example, conceivable insurance products include those that change insurance premiums according to the failure probability (see Fig. 21), those that compensate for loss due to consumables failures according to the failure probability (see Fig. 22), those that support maintenance according to the failure probability (see Fig. 23), those that guarantee service level agreement (SLA) advanced by a lifetime diagnosis technology (see Fig. 24) and the like.

As for the insurance product whose premium is changed according to the failure probability shown in Fig. 21, appropriate operation and maintenance by the user is evaluated according to the failure probability, and the insurance premium and coverage vary according to the usage status of the device and the transition of the risk.

As for the insurance product which compensates for loss due to consumables failures according to the failure probability shown in Fig. 22, it is evaluated that there is age deterioration if the failure probability is higher than the threshold and that there is an accident risk if the failure probability is lower than the threshold, and devices and fields which have not been covered by insurance because it is difficult to distinguish between failures due to age deterioration and failures due to accidents are compensated for.

As for the insurance product that supports maintenance depending on the failure probability shown in Fig. 23, the cost of avoiding or reducing the failure is compensated for according to the failure probability, and the loss due to maintenance is compensated for even if there is no physical damage to the device, and the loss in the event of a failure (misreport) is also compensated for even though the failure probability is below the threshold.

As for the insurance product that guarantees the service level agreement (SLA) advanced by the lifetime diagnosis technology shown in Fig. 24, the SLA that can be guaranteed by the device manufacturer and the like is improved by the lifetime diagnosis, and when the service level goes below the SLA, the insurance compensates for profits, costs for continuing the operation and the like, as well as for detailed investigation and cause-finding costs upon activation of an alert or in case of failure.

Although the best mode for carrying out the present invention and the like have been specifically described above, the present invention is not limited thereto, and various changes can be made without departing from the gist thereof.

According to this embodiment, it is promoted to shift the maintenance system from the currently common time-based maintenance (TBM) to the condition-based maintenance (CBM), thereby making it possible to set and implement a financially optimal maintenance and to reduce maintenance costs.

More specifically, it is possible to set a financially optimal maintenance timing and to reduce maintenance costs based on the remaining life of the maintenance target.

Note that the present invention is not limited to the above embodiment, for example, where the implementation timing for the regular maintenance is predetermined, and an optimal regular maintenance timing may be proposed from the timing of preliminary maintenance (predictive maintenance) for the maintenance target (time that can be postponed). In that case, the operating rate of the maintenance target may be improved. By aligning the timing of preliminary maintenance (predictive maintenance) of the maintenance target, it can be expected to achieve an effect of improving the work efficiency of maintenance personnel dispatched for preliminary maintenance.

There is a need to provide new services that make it possible to set a financially optimal maintenance timing and to reduce maintenance costs based on the remaining life of the maintenance target, and that need may also include those related to insurance products related to maintenance operation. In other words, there is a need to provide services pertaining to the development and operation of insurance products that provide appropriate coverage by accurately considering risk factors such as failures and associated outages.

The description of this specification clarifies at least the following. Specifically, in the maintenance plan assistance method of this embodiment, the information processing device holds information on clearing the damage residual rate as a maintenance effect expected by applying the maintenance menu in the storage device, and identifies the maintenance effect when each maintenance menu is applied to each device based on the information on clearing the damage residual rate indicated by the maintenance menu and the temporal changes in the failure probability in the processing of identifying the maintenance effect.

Thus, it is possible to set the maintenance timing based on the degree of reduction of the failure probability when the maintenance menu that clears the damage such as deterioration and damage accumulated in each device to be maintained is adopted.

In the maintenance plan assistance method of this embodiment, the information processing device may be configured to hold information on a damage suppression rate and duration of the damage suppression rate as a maintenance effect expected by applying the maintenance menu in the storage device, and to identify a maintenance effect when each maintenance menu is applied to each device based on the information on the damage suppression rate and duration indicated by the maintenance menu and the temporal changes in failure probability in the processing of identifying the maintenance effect.

Thus, it is possible to set the maintenance timing based on the degree of reduction of failure probability when adopting a maintenance menu that temporarily reduces damage such as deterioration and damage accumulated in each device to be maintained and suppresses the subsequent influence.

In the maintenance plan assistance method of this embodiment, when determining the maintenance menu, the information processing device may identify one in which the timing at which the cumulative damage of the target device becomes equal to or less than a predetermined threshold is within a period of the predetermined maintenance timing when the maintenance menu is applied.

Thus, it is possible to assist formulation of a maintenance plan that keeps the cumulative damage of each device below a certain standard at a predetermined or arbitrary timing such as regular maintenance, for example.

In the maintenance plan assistance method of this embodiment, when determining the maintenance menu including the variable range at a maintenance timing specified by a user or a scheduled implementation timing of the regular maintenance determined in advance upon determination of the maintenance menu, the information processing device may output each information to a predetermined device, the information including the maintenance menu specified by the determination and the condition-based maintenance implementation timing changed to the maintenance timing specified by the user or the scheduled implementation timing of the regular maintenance.

Thus, it is possible to take measures such as aligning the condition-based maintenance implementation timing with the scheduled timing of the regular maintenance that is decided in advance, or aligning the condition-based maintenance implementation timing with an arbitrary timing determined to be suitable by the user based on various circumstances such as a production plan. As a result, it is possible to set a financially more optimal maintenance timing and reduce maintenance costs based on the remaining life of the maintenance target.

In the maintenance plan assistance device of this embodiment, the storage device holds information on clearing the damage residual rate as a maintenance effect expected by applying the maintenance menu, and the computation device identifies a maintenance effect to be achieved when each maintenance menu is applied to each of the devices based on the information on clearing the damage residual rate indicated by the maintenance menu and the temporal changes in failure probability in the processing of identifying the maintenance effect.

In the maintenance plan assistance device of this embodiment, the storage device may hold information on a damage suppression rate and a duration of the damage suppression rate as the maintenance effect expected by applying the maintenance menu, and the computation device may identify the maintenance effect when each maintenance menu is applied to each device based on the information on the damage suppression rate and duration indicated by the maintenance menu and the temporal changes in failure probability in the processing of identifying the maintenance effect.

In the maintenance plan assistance device of this embodiment, in the processing of determining the maintenance menu, the computation device may identify one in which the timing at which the cumulative damage of the target device becomes equal to or less than a predetermined threshold value when the maintenance menu is applied is within the predetermined maintenance timing period.

In the maintenance plan assistance device of this embodiment, the computation device may determine a maintenance menu including the variable range in the maintenance timing specified by the user or the scheduled implementation timing of regular maintenance specified in advance when determining the maintenance menu, and may output each information to a predetermined device, the information including the maintenance menu specified by the determination and the condition-based maintenance implementation timing changed to the maintenance timing specified by the user or the scheduled implementation timing of the regular maintenance.

### [Reference Signs List]

1 network
10 maintenance plan assistance system
100 maintenance plan assistance device
101 storage device
102 program
103 memory
104 computation device
105 input device
106 output device
107 communication device
125 maintenance master DB
126 maintenance plan DB
127 production plan DB
128 remaining life information DB
200 user terminal
300 analysis system

## Claims

1. A maintenance plan assistance method executed by an information processing device, comprising:
holding, in a storage device, remaining life information relating to devices covered by a maintenance plan, and a list of maintenance menus; and
executing processing of
identifying a maintenance effect when each maintenance menu is applied to each of the devices based on the maintenance menus and temporal changes in failure probabilities of each of the devices indicated by the remaining life information,
identifying a variable range of a condition-based maintenance implementation timing, the variable range being dependent on the maintenance effect, and determining a maintenance menu including the variable range for a predetermined maintenance timing, and
outputting, to a predetermined device, information including the maintenance menu identified by the determination and the condition-based maintenance implementation timing changed to the predetermined maintenance timing.

2. The maintenance plan assistance method according to claim 1, wherein
the information processing device holds information on clearing a damage residual rate as a maintenance effect expected by applying the maintenance menu in the storage device, and
identifies the maintenance effect when each maintenance menu is applied to each device based on the information on clearing the damage residual rate indicated by the maintenance menu and the temporal changes in the failure probability in the processing of identifying the maintenance effect.

3. The maintenance plan assistance method according to claim 1, wherein
the information processing device holds information on a damage suppression rate and a duration of the damage suppression rate, as a maintenance effect expected by applying the maintenance menu, in the storage device, and
identifies a maintenance effect when each maintenance menu is applied to each device based on the information on the damage suppression rate and the duration of the damage suppression rate indicated by the maintenance menu and the temporal changes in the failure probability in the processing of identifying the maintenance effect.

4. The maintenance plan assistance method according to claim 1, wherein
when determining the maintenance menu, the information processing device identifies one in which the timing at which a cumulative damage of the target device becomes equal to or less than a predetermined threshold is within a period of the predetermined maintenance timing when the maintenance menu is applied.

5. The maintenance plan assistance method according to claim 1, wherein
when determining the maintenance menu, the information processing device determines a maintenance menu including the variable range in a maintenance timing specified by a user or a scheduled implementation timing of regular maintenance specified in advance, and
when outputting each of the information to a predetermined device, the information processing device outputs each information to the predetermined device, the information including the maintenance menu specified by the determination and the condition-based maintenance implementation timing changed to the maintenance timing specified by the user or the scheduled implementation timing of the regular maintenance.

6. A maintenance plan assistance device comprising:
a storage device configured to hold remaining life information relating to devices covered by a maintenance plan, and a list of maintenance menus; and
a computation device configured to execute processing of
identifying a maintenance effect when each maintenance menu is applied to each of the devices based on the maintenance menus and temporal changes in failure probabilities of each of the devices indicated by the remaining life information,
identifying a variable range of a condition-based maintenance implementation timing, the variable range being dependent on the maintenance effect, and determining a maintenance menu including the variable range for a predetermined maintenance timing, and
outputting, to a predetermined device, information including the maintenance menu identified by the determination and the condition-based maintenance implementation timing changed to the predetermined maintenance timing.

7. The maintenance plan assistance device according to claim 6, wherein
the storage device holds information on clearing a damage residual rate as a maintenance effect expected by applying the maintenance menu, and
in the processing of identifying the maintenance effect, the computation device identifies a maintenance effect when each maintenance menu is applied to each of the devices based on the information on clearing the damage residual rate indicated by the maintenance menu and the temporal changes in failure probabilities.

8. The maintenance plan assistance device according to claim 6, wherein
the storage device holds information on a damage suppression rate and a duration of the damage suppression rate as the maintenance effect expected by applying the maintenance menu, and
in the processing of identifying the maintenance effect, the computation device identifies the maintenance effect when each maintenance menu is applied to each device based on the information on the damage suppression rate and the duration of the damage suppression rate indicated by the maintenance menu and the temporal changes in failure probabilities.

9. The maintenance plan assistance device according to claim 6, wherein
in the processing of determining the maintenance menu, the computation device identifies one in which the timing at which a cumulative damage of the target device becomes equal to or less than a predetermined threshold value when the maintenance menu is applied is within the predetermined maintenance timing period.

10. The maintenance plan assistance device according to claim 6, wherein
when determining the maintenance menu, the computation device determines a maintenance menu including the variable range in the maintenance timing specified by a user or the scheduled implementation timing of regular maintenance specified in advance, and
when outputting each of the information to a predetermined device, the computation device outputs each information to the predetermined device, the information including the maintenance menu specified by the determination and the condition-based maintenance implementation timing changed to the maintenance timing specified by the user or the scheduled implementation timing of the regular maintenance.
